# EUROPÄISCHE PATENTANMELDUNG

(11) **EP 4 663 027 A1**
(43) Veröffentlichungstag der Anmeldung: **17.12.2025**
(21) Anmeldenummer: 25177281.0
(22) Anmeldetag: 19.05.2025
(51) Int. Cl.: A23N 1/00, A47J 19/02

(54) **VORRICHTUNG ZUM PRESSEN EINES SEGMENTS EINER ZITRUSFRUCHT**

(30) Priorität: 10.06.2024 DE 102024116177
(71) Anmelder: Hönes, Manfred, 73066 Uhingen (DE)
(72) Erfinder: Hönes, Manfred, 73066 Uhingen (DE)
(74) Vertreter: DREISS Patentanwälte PartG mbB

(57) **Zusammenfassung**

Eine Vorrichtung (100) zum Pressen eines Segments (200) einer Zitrusfrucht, beispielsweise eines Schnitzes (200), umfassend: ein Aufnahmeelement (10) mit einem Aufnahmeraum (12), der durch eine umlaufende Wandung (14) und eine Aufnahmefläche (16) begrenzt ist, wobei der Aufnahmeraum (12) eine Einlegeöffnung (18) aufweist; ein Presselement (26), das am Aufnahmeelement (10) anordenbar ist, sodass es sich zumindest teilweise innerhalb des Aufnahmeraums (12) erstreckt und entlang einer Pressachse (2) relativ zum Aufnahmeelement (10) translatorisch bewegbar ist; wobei die Pressachse (2) in einer durch die Einlegeöffnung (18) definierten ersten Ebene (20) liegt und die Aufnahmefläche (16) eine zweite Ebene (22) definiert, die eine Schnittgerade (24) mit der ersten Ebene (20) aufweist.

## Beschreibung

Die Offenbarung betrifft eine Vorrichtung zum Pressen eines Segments einer Zitrusfrucht.

Zitruspressen zur Gewinnung von Saft aus einer Zitrusfrucht sind bekannt. In vielen Ausgestaltungen ist ein manuelles hygienisches und effizientes Pressen nicht gleichermaßen möglich.

Die der Erfindung zugrundeliegende Aufgabe wird durch eine Vorrichtung gemäß den unabhängigen Ansprüchen gelöst.

Bei manchen Beispielen wird eine Vorrichtung zum Pressen eines Segments einer Zitrusfrucht, beispielsweise eines Schnitzes, vorgeschlagen. Die Vorrichtung umfasst: ein Aufnahmeelement mit einem Aufnahmeraum, der durch eine umlaufende Wandung und eine Aufnahmefläche begrenzt ist, wobei der Aufnahmeraum eine Einlegeöffnung aufweist; und ein Presselement, das am Aufnahmeelement angeordnet ist, sodass es sich zumindest teilweise innerhalb des Aufnahmeraums erstreckt und entlang einer Pressachse relativ zum Aufnahmeelement translatorisch bewegbar ist. Das Presselement ist ausgebildet, mittels des Aufnahmeelements und einer Bewegung des Presselements in eine Pressrichtung das Segment der Zitrusfrucht zu pressen. Die Pressachse liegt in einer durch die Einlegeöffnung definierten ersten Ebene, wobei die Aufnahmefläche eine zweite Ebene definiert, die eine Schnittgerade mit der ersten Ebene aufweist. Somit wird Saft des Segments der Zitrusfrucht an einer Stelle des Aufnahmeelements gesammelt und ein Halten des Segments in dem Aufnahmeelement verbessert. Des Weiteren kann die Vorrichtung gleichermaßen zum Pressen einer Scheibe, beziehungsweise eines Teils einer Scheibe, der Zitrusfrucht sowie zum Pressen eines Schnitzes der Zitrusfrucht verwendet werden. Ein Schnitz ist beispielsweise ein Segment der Zitrusfrucht, das mittels zwei, beispielsweise entlang einer Längsachse, axial orientierter radialer Schnitte aus einer ellipsoiden Zitrusfrucht ausgelöst ist. Dies kann beispielsweise ein Viertel oder eine Hälfte der Zitrusfrucht sein. Beispielsweise schließen die Schnitte in einer Umfangsrichtung der Zitrusfrucht einen Winkel zwischen 5° und 180° ein, insbesondere zwischen 5° und 100°.

Bei manchen Beispielen ist die Schnittgerade parallel zur Pressachse ausgerichtet. Dadurch ist ein Aufnehmen des Segments der Zitrusfrucht in dem Aufnahmeelement und ein Halten des Segments während eines Pressens verbessert. Zudem ist ein Sammeln des Safts verbessert und eine Gefahr eines Verschüttens des Safts wird verringert. Des Weiteren ist ein kontrolliertes Ausgießen des Saftes während und nach dem Pressen des Segments der Zitrusfrucht vereinfacht.

Bei manchen Beispielen bilden die Pressachse und die Schnittgerade einen Schnittpunkt und die Pressachse und die Aufnahmefläche schließen beispielsweise einen spitzen Winkel ein, beispielsweise einen in Pressrichtung geöffneten spitzen Winkel. Dadurch ist eine Lagerung des Segments der Zitrusfrucht im Aufnahmeelement bei einem Einlegen und während des Pressens des Segments der Zitrusfrucht verbessert. Zudem ist ein Sammeln des Safts des Segments der Zitrusfrucht verbessert und eine Gefahr des Verschüttens des Safts ist verringert. Ein Ausgießen des Safts des Segments der Zitrusfrucht während und nach dem Pressen des Segments der Zitrusfrucht ist vereinfacht.

Bei manchen Beispielen liegt die Schnittgerade außerhalb der Aufnahmefläche. Hierdurch wird der Saft des Segments der Zitrusfrucht besser in dem Aufnahmeelement aufgefangen und eine Gefahr eines, beispielsweise versehentlichen, Ausschüttens des Safts verringert.

Bei manchen Beispielen weist das Presselement eine der Aufnahmefläche zugewandte Außenfläche auf, die insbesondere im Wesentlichen parallel zur Aufnahmefläche ausgebildet ist.

Bei manchen Beispielen umfasst das Aufnahmeelement zwei gegenüberliegende laterale Führungsabschnitte, die sich an die Einlegeöffnung anschließen, wobei das Presselement mittels der Führungsabschnitte an dem Aufnahmeelement lagerbar ist. Die lateralen Führungsabschnitte ermöglichen eine stabile Lagerung und Führung des Presselements, wodurch das Pressen des Segments der Zitrusfrucht effizienter wird. Zudem ist eine Lagerung des Presselements am Aufnahmeelement mittels der lateralen Führungsabschnitte kostengünstig umsetzbar.

Bei manchen Beispielen umfassen die Führungsabschnitte Einsetzabschnitte, die ausgebildet sind, das Presselement von dem Aufnahmeelement freizugeben und das Presselement in die Führungsabschnitte einzusetzen. Hierdurch kann das Presselement vom Aufnahmeelement getrennt werden, womit eine Reinigung vereinfacht und damit eine Hygiene verbessert ist.

Bei manchen Beispielen umfasst die umlaufende Wandung eine zumindest teilweise umlaufende Innenkontur, die um eine Horizontale zur Aufnahmefläche konkav ist, wobei die umlaufende Wandung mittels der umlaufenden Innenkontur an die Aufnahmefläche angrenzt. Die umlaufende Innenkontur ermöglicht eine bessere Reinigung des Aufnahmeelements, da beispielsweise keine scharfen Kanten zwischen der Aufnahmefläche und der umlaufenden Wandung vorhanden sind, in denen sich schwer zu erreichende Ablagerungen bilden können. Des Weiteren kann diese Ausführungsform des Aufnahmeelements mit der umlaufenden Innenkontur einfach und kostengünstig gefertigt werden, beispielsweise mittels Tiefziehen.

Bei manchen Beispielen umfasst die Aufnahmefläche einen ersten Abschnitt, beispielsweise einen Ausgussabschnitt, und einen an den ersten Abschnitt angrenzenden zweiten Abschnitt, beispielsweise einen Pressabschnitt.

Bei manchen Beispielen umfasst die umlaufende Wandung einen an den ersten Abschnitt angrenzenden ersten Bereich, beispielsweise einen Ausgussbereich, der zumindest einen Ausguss umfasst, der eine entlang der umlaufenden Wandung konkav geformte Innenkontur aufweist. Der Ausguss ermöglicht ein einfaches und gezielten Ausgießen des Safts des Segments der Zitrusfrucht, während oder nach dem Pressen.

Bei manchen Beispielen umfasst der erste Bereich der umlaufenden Wandung einen ersten lateralen Ausguss mit einer entlang der umlaufenden Wandung konkav geformten Innenkontur, einen zweiten lateralen Ausguss mit einer entlang der umlaufenden Wandung konkav geformten Innenkontur und eine entlang der umlaufenden Wandung konvex geformte Innenkontur, wobei die konvex geformte Innenkontur den ersten Ausguss und den zweiten Ausguss verbindet. Der erste Ausguss und der zweite Ausguss erhöhen eine Flexibilität der Vorrichtung, zudem wird ein Komfort der Vorrichtung verbesset, da eine einfache Bedienung beispielweise für Recht- und Linkshänder möglich ist. Die konvex geformte Innenkontur verringert die Gefahr, dass Saft des Segments der Zitrusfrucht während oder nach dem Pressen außerhalb der Ausgüsse ausgegeben wird.

Bei manchen Beispielen sind der erste laterale Ausguss und der zweite laterale Ausguss entlang der Pressachse axial versetzt, beispielsweise derart, dass der erste laterale Ausguss nach dem zweiten lateralen Ausguss entgegen der beziehungsweise einer Pressrichtung vorgesehen ist. Dadurch wird eine Gefahr eines, beispielsweise versehentlichen, Ausgießens des Safts des Segments der Zitrusfrucht aus dem nicht gewünschten Ausguss verringert.

Bei manchen Beispielen weist das Presselement eine dem ersten Bereich der umlaufenden Wandung zugewandte entsprechende Gegenkontur auf. Dadurch ist eine Baugröße der Vorrichtung verringert, da das Presselement soweit wie möglich in eine Startposition an den ersten Bereich der umlaufenden Wandung gebracht werden kann, ohne dass unnötige Lücken zwischen Presselement und Aufnahmeelement bestehen. Zudem wird dadurch auch ein vergrößerter Raum der Einlegeöffnung, bei gleichbleibenden Abmessungen des Aufnahmeelements und Presselements, freigegeben, wodurch ein Einlegen des Segments der Zitrusfrucht in das Aufnahmeelement vereinfacht ist und größere Segmente der Zitrusfrucht einlegbar und auspressbar sind.

Bei manchen Beispielen umfasst die umlaufende Wandung einen dem ersten Bereich gegenüberliegenden zweiten Bereich, beispielsweise einen Pressbereich, der an den zweiten Abschnitt der Aufnahmefläche angrenzt, wobei der zweite Bereich zumindest eine entlang der umlaufenden Wandung konkav geformte Innenkontur aufweist. Hierdurch werden Segmente der Zitrusfrucht unterschiedlicher Form, beispielsweise Scheiben oder Schnitze, vorteilhaft entlang der Pressachse während des Pressens gehalten.

Bei manchen Beispielen umfasst der zweite Bereich eine erste konkave Innenkontur und eine zweite konkave Innenkontur, die beispielsweise mittels einer Verbindungskontur verbunden sind. Dadurch werden Segmente der Zitrusfrucht unterschiedlicher Form verbessert entlang der Pressachse während des Pressens gehalten. Beispielsweise ist die erste konkave Innenkontur ausgebildet, Schnitze der Zitrusfrucht zu halten und die zweite konkave Innenkontur ist ausgebildet, Scheiben der Zitrusfrucht zu halten. Die optionale Verbindungskontur ist beispielsweise eine entlang der umlaufenden Wandung konvex verlaufende Innenkontur und beispielsweis als Radius ausgebildet. Die Verbindungskontur kann auch als Fase oder ebene Verbindung ausgestaltet sein.

Bei manchen Beispielen ist vorgesehen, dass der zweite Abschnitt der Aufnahmefläche einen Halteabschnitt umfasst, der ausgebildet ist, das Segment der Zitrusfrucht in einer im Wesentlichen orthogonalen Richtung zur Pressachse zu lagern, wobei die erste konkave Innenkontur des zweiten Bereichs der umlaufenden Wandung an den Halteabschnitt, beispielsweise mittels der, beziehungsweise einer, umlaufenden Innenkontur der umlaufenden Wandung, angrenzt und ausgebildet ist, das Segment der Zitrusfrucht in der, beziehungsweise einer, Pressrichtung zu lagern. Somit ist das Segment der Zitrusfrucht in mehreren Raumrichtungen gelagert und eine Gefahr eines Herausfalles des Segments aus dem Aufnahmeelement, insbesondere während des Pressens, ist verringert. Somit können größere Kräfte während des Pressens aufgebracht werden, die zu einem höheren Saftertrag führen.

Bei manchen Beispielen ist vorgesehen, dass die erste konkave Innenkontur und die zweite konkave Innenkontur des zweiten Bereichs entlang der Pressachse axial versetzt sind, insbesondere derart, dass die erste konkave Innenkontur nach der zweiten konkaven Innenkontur in der, beziehungsweise einer, Pressrichtung vorgesehen ist. Somit ist das Halten des Segments der Zitrusfrucht in dem Aufnahmeelement weiter verbessert. Es können größere Kräfte während des Pressens aufgebracht werden, die zu einem höheren Saftertrag führen.

Bei manchen Beispielen weist das Presselement eine dem zweiten Bereich der umlaufenden Wandung zugewandte Außenkontur auf, die als Gegenkontur zu dem zweiten Bereich ausgebildet ist, beispielsweise so, dass die dem zweiten Bereich zugewandte Außenkontur um eine zur Einlegeöffnung im Wesentlichen orthogonalen Achse konvex geformt ist. Dadurch wird das Segment der Zitrusfrucht sicherer zwischen dem Aufnahmeelement und dem Presselement, insbesondere während des Pressens, gehalten. Somit können größere Kräfte während des Pressens aufgebracht werden, die zu einem höheren Saftertrag führen.

Bei manchen Beispielen ist vorgesehen, dass die dem zweiten Bereich zugewandte Außenkontur des Presselements zu der zweiten Innenkontur des zweiten Bereichs anschmiegbar ausgebildet ist. Dadurch wird das Segment der Zitrusfrucht sicherer zwischen dem Aufnahmeelement und dem Presselement, insbesondere während des Pressens, gehalten. Somit können größere Kräfte während des Pressens aufgebracht werden, die zu einem höheren Saftertrag führen.

Bei manchen Beispielen umfasst das Presselement eine Ausnehmung mit einer Öffnungsrichtung, die mit einer Öffnungsrichtung der Einlegeöffnung übereinstimmt. Durch die Ausnehmung kann das Presselement besser betätigt werden, wodurch höhere Kräfte während des Pressens aufgebracht werden können und ein Saftertrag gesteigert wird.

Bei manchen Beispielen weist die Ausnehmung eine konkave Innenkontur auf, insbesondere eine konkave Betätigungskontur, die entgegen der beziehungsweise einer Pressrichtung orientiert ist. Durch die konkave Innenkontur kann das Presselement besser betätigt werden, wodurch höhere Kräfte während des Pressens aufgebracht werden können und ein Saftertrag gesteigert wird.

Bei manchen Beispielen ist vorgesehen, dass das Presselement einen Betätigungsabschnitt umfasst, der sich außerhalb des Aufnahmeraums erstreckt. Durch den Betätigungsabschnitt kann das Presselement besser betätigt werden, wodurch höhere Kräfte während des Pressens aufgebracht werden können und ein Saftertrag gesteigert wird. Zudem ist eine Bedienung der Vorrichtung mit einer Hand vereinfacht möglich.

Bei manchen Beispielen ist vorgesehen, dass die Aufnahmefläche zumindest eine Erhebung umfasst. Die Erhebung sorgt dafür, dass zwischen dem Segment der Zitrusfrucht beziehungsweise dem Presselement und der Aufnahmefläche Freiräume bestehen bleiben, die ein Fließen des Safts des Segments der Zitrusfrucht auch bei eingelegtem Segment ermöglichen.

Bei manchen Beispielen ist vorgesehen, dass sich der Aufnahmeraum ausgehend von der Einlegeöffnung in Richtung der Aufnahmefläche zumindest teilweise und/oder entlang der umlaufenden Wandung zumindest bereichsweise verjüngt. Dadurch wird ein Volumen des Aufnahmeraums vergrößert ohne ein Halten des Segments der Zitrusfrucht im Aufnahmeelement zu beeinträchtigen. Das vergrößerte Volumen verringert eine Gefahr eines Auslaufens oder Verschüttens des Saftes des Segments der Zitrusfrucht.

Bei manchen Beispielen ist vorgesehen, dass sich der Aufnahmeraum zumindest im ersten Bereich der umlaufenden Wandung, insbesondere an dem zumindest einen Ausguss, zumindest teilweise in Richtung der Aufnahmefläche verjüngt. Dadurch ist ein Ausgießen des Safts des Segments der Zitrusfrucht verbessert und vereinfacht.

Bei manchen Beispielen wird eine Vorrichtung zum Pressen eines Segments einer Zitrusfrucht, beispielsweise eines Schnitzes, bereitgestellt, umfassend: ein Aufnahmeelement mit einem Aufnahmeraum, der durch eine umlaufende Wandung und eine Aufnahmefläche begrenzt ist, wobei der Aufnahmeraum eine Einlegeöffnung aufweist; und ein Presselement, das am Aufnahmeelement angeordnet ist, sodass es sich zumindest teilweise innerhalb des Aufnahmeraums erstreckt und entlang einer Pressachse relativ zum Aufnahmeelement translatorisch bewegbar ist. Wobei die Pressachse in einer durch die Einlegeöffnung definierten ersten Ebene liegt und die Aufnahmefläche eine zweite Ebene definiert, wobei die erste Ebene und die zweite Ebene einen Grundkörper einschließen, der eine in der ersten Ebene liegende zur Pressachse symmetrische Grundfläche eines Vierecks, beispielsweise Rechtecks aufweist, wobei der Grundkörper ausgehend von der Grundfläche vier Seitenkanten mit unterschiedlichen Höhen umfasst.

Bei manchen Beispielen wird eine Vorrichtung bereitgestellt, die zum Pressen eines Schnitzes einer Zitrusfrucht geeignet ist, wobei der Schnitz mittels zwei, beispielsweise entlang einer Längsachse der Zitrusfrucht, axial orientierter radialer Schnitte aus einer ellipsoiden Zitrusfrucht ausgelöst ist und die Schnitte in einer Umfangsrichtung der Zitrusfrucht einen Winkel zwischen 5° und 180°, beispielsweise 5° und 100°, einschließen, umfassend: ein Aufnahmeelement mit einem Aufnahmeraum, der durch eine umlaufende Wandung und eine Aufnahmefläche begrenzt ist, wobei der Aufnahmeraum eine Einlegeöffnung aufweist; und ein Presselement, das am Aufnahmeelement angeordnet ist, sodass es sich zumindest teilweise innerhalb des Aufnahmeraums erstreckt und entlang einer Pressachse relativ zum Aufnahmeelement translatorisch bewegbar ist. Wobei die Aufnahmefläche den Schnitz an einer Schnittfläche aufnimmt und eine Längsachse des Schnitzes im Wesentlichen parallel zur Pressachse orientiert ist, wobei sich der Schnitz bei einem Pressen mit einem von dem Schnitz umfassten Teil der Schale der Zitrusfrucht an der umlaufenden Wandung und dem Presselement abstützt.

Weiter Beispiele ergeben sich aus der folgenden Beschreibung und der Zeichnung. In der Zeichnung zeigt:
- Figur 1: eine schematische Darstellung eines Aufnahmeelements einer Vorrichtung zum Pressen eines Segments einer Zitrusfrucht gemäß manchen Beispielen;
- Figur 2a: eine schematische Darstellung der Vorrichtung gemäß manchen Beispielen;
- Figur 2b: eine schematische Darstellung der Vorrichtung gemäß manchen Beispielen in einer alternativen Ansicht;
- Figur 3: eine schematische Darstellung des Aufnahmeelements gemäß manchen Beispielen;
- Figur 4a: eine schematische Darstellung eines Presselements gemäß manchen Beispielen;
- Figur 4b: eine schematische Darstellung des Presselements gemäß manchen Beispielen in einer alternativen Ansicht;
- Figur 5: eine schematische Darstellung des Aufnahmeelements gemäß manchen Beispielen in einer Draufsicht mit dem Segment der Zitrusfrucht;
- Figur 6: eine schematische Darstellung eines Schnittes der Vorrichtung gemäß manchen Beispielen;
- Figur 7: eine schematische Darstellung eines Schnittes der Vorrichtung gemäß manchen Beispielen.

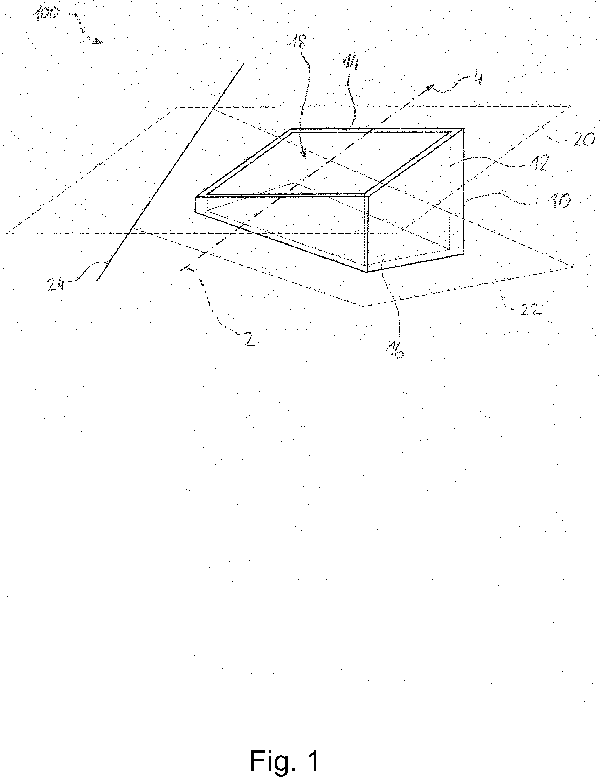

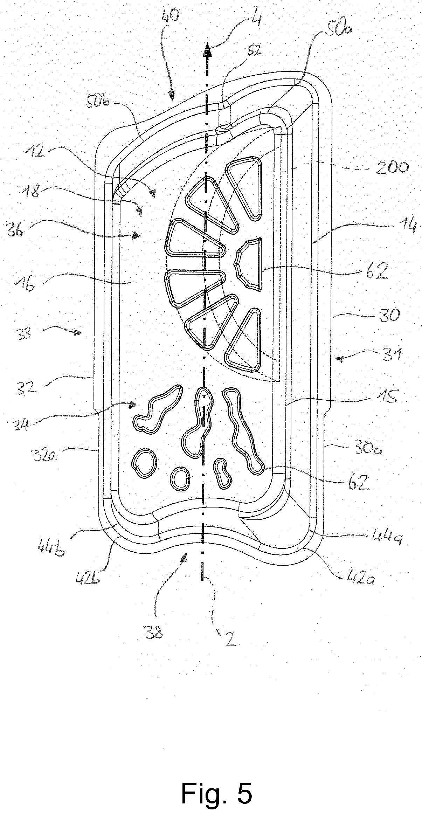

Figur 1 zeigt eine schematische Darstellung eines Aufnahmeelements 10 einer Vorrichtung 100 zum Pressen eines Segments 200 (Fig. 5) einer Zitrusfrucht, beispielsweise eines Schnitzes 200. Das Segment 200 der Zitrusfrucht ist beispielhaft in der Figur 5 dargestellt und wird im Folgenden zur Vereinfachung als Segment 200 bezeichnet. Das Aufnahmeelement 10 (Fig. 1) umfasst einen Aufnahmeraum 12, der durch eine umlaufende Wandung 14 und eine Aufnahmefläche 16 begrenzt ist, wobei der Aufnahmeraum 12 eine Einlegeöffnung 18 aufweist. Die Einlegeöffnung 18 gibt den Aufnahmeraum 12 frei, damit das Segment 200 in das Aufnahmeelement 10 zum Pressen eingelegt werden kann. Das Aufnahmeelement 10 ist beispielsweise als eine Schale ausgebildet.

Die Einlegeöffnung 18 definiert eine, beispielsweise gedachte, beispielsweise fiktive oder virtuelle, erste Ebene 20. In dieser Ebene 20 liegt eine, beispielsweise gedachte, beispielsweise fiktive oder virtuelle, Pressachse 2, entlang welcher sich eine Presskraft orientiert, die zum Pressen des Segments 200 herangezogen wird. Zudem ist eine Pressrichtung 4 entlang der Pressachse 2 mittels eines Pfeils dargestellt. Wird die Presskraft in die Pressrichtung 4 aufgewandt erfolgt ein Pressen des eingelegten Segments 200 der Zitrusfrucht und Saft tritt aus dem Segment 200 aus.

Die Aufnahmefläche 16 des Aufnahmeelements 10 definiert eine, beispielsweise gedachte, beispielsweise fiktive oder virtuelle, zweite Ebene 22, die eine Schnittgerade 24 mit der ersten Ebene 20 aufweist. Die erste Ebene 20 und die zweite Ebene 22 sind nicht parallel zueinander ausgerichtet. Dadurch resultiert ein relativ zur Einlegeöffnung 18 schief orientierter Boden in Form der Aufnahmefläche 16. Das Segment 200 wird somit stabiler in dem Aufnahmeelement 10 gehalten, da es beispielsweise beim Pressen entlang der, beispielsweise als schief bezeichneten, Aufnahmefläche 16 in einer Vorzugsrichtung gleitet wird, bis es mittels der umlaufenden Wandung 14 und der Aufnahmefläche 16 gehalten wird. Zudem sammelt sich der Saft des Segments 200 primär in einem Abschnitt der der Aufnahmefläche 16, der den größten Abstand zur Einlegeöffnung 18 aufweist. Dieser Abschnitt kann auch als Senke bezeichnet werden, da der Saft eine bevorzugte Fließrichtung zu diesem Abschnitt der Aufnahmefläche 16 aufweist.

Es kann vorgesehen sein, dass die Schnittgerade 24 parallel zur Pressachse 2 ausgerichtet ist. Dazu ist die zweite Ebene 22 um eine zur Pressachse 2 parallelen Achse rotiert. Die Aufnahmefläche 16 weist somit eine Neigungsrichtung auf, die orthogonal zur Pressachse 2 orientiert ist. Es resultiert eine Senke der Aufnahmefläche 16, die sich parallel zur Pressachse 2 erstreckt, wodurch beispielsweise ein Ausgießen des Safts des Segments 200 verbessert wird, da eine Gefahr eines Verschüttens verringert und ein gezielteres Ausgießen möglich ist.

Denkbar ist, dass die Pressachse 2 und die Schnittgerade 24 einen Schnittpunkt bilden und beispielweise die Pressachse 2 und die Aufnahmefläche 16 einen, beispielsweise in Pressrichtung 4 geöffneten, spitzen Winkel einschließen. Im Beispiel der Figur 1 schließen die Pressachse 2 und die Aufnahmefläche 16 beziehungsweise die zweite Ebene 22 einen in die Pressrichtung 4 geöffneten spitzen Winkel ein. Somit vergrößert sich ein Abstand zwischen der ersten Ebene 20 und der zweiten Ebene 22 entlang der Pressachse 2 in die Pressrichtung 4. Die zweite Ebene 22 ist um eine zur Pressachse 2 parallelen Achse und um eine zur Pressachse 2 orthogonalen Achse relativ zur ersten Ebene 20 rotiert. Dadurch ist die Aufnahmefläche 16 entlang der Pressachse 2 und orthogonal zur Pressachse 2 geneigt. Das Segment 200 wird dadurch beim Pressen in eine durch diese Neigungen resultierende Senke geschoben und deshalb besser im Aufnahmeelement 10 durch die umlaufende Wandung 14 und die Aufnahmefläche 16 gehalten. Zudem sammelt sich der Saft des Segments 200 in dieser Senke und die Gefahr des Verschüttens ist weiter verringert.

Die Schnittgerade 24 kann beispielsweise außerhalb der Aufnahmefläche 16 vorgesehen sein. Dadurch resultiert eine Ausgestaltung des Aufnahmeelements 10, in der sich die Aufnahmefläche 16 und die Einlegeöffnung 18 nicht berühren und die umlaufenden Wandung 14 die Aufnahmefläche 16 komplett umschließt. Die Gefahr des Verschüttens des Safts ist somit weiter verringert.

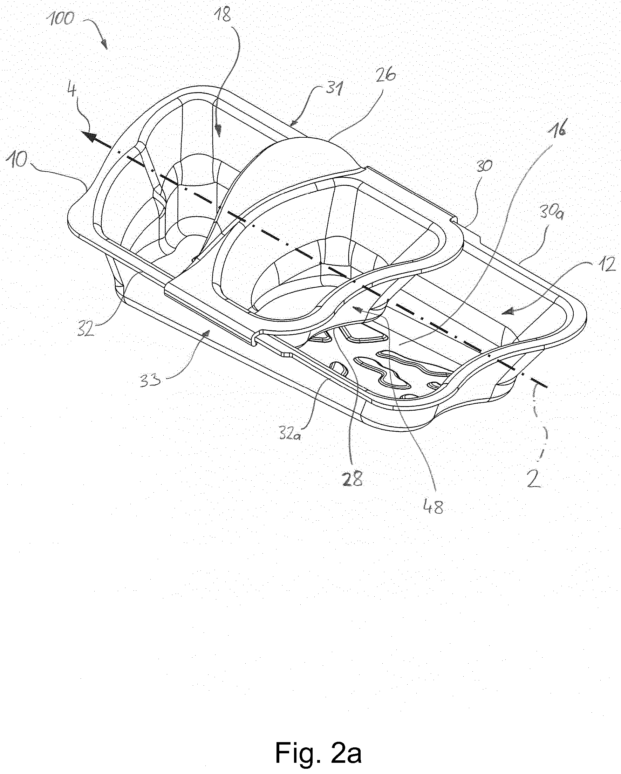

Die Figur 2a zeigt eine schematische Darstellung der Vorrichtung 100. In dieser Ausführungsform umfasst die Vorrichtung 100 ein Presselement 26, das am Aufnahmeelement 10 anordenbar ist, sodass es sich zumindest teilweise innerhalb des Aufnahmeraums 12 erstreckt und entlang einer Pressachse 2 relativ zum Aufnahmeelement 10 translatorisch bewegbar ist. Im Beispiel ist das Presselement 26 am Aufnahmeelement 10 angeordnet, diese Anordnung kann als zusammengesetzte Vorrichtung 100, zusammengesetzte Zitruspresse oder zusammengesetzter Zustand bezeichnet werden.

Im Beispiel umfasst das Aufnahmeelement 10 zwei gegenüberliegende laterale Führungsabschnitte 30 und 32, die sich an die Einlegeöffnung 18 anschließen. Das Presselement 26 ist mittels der Führungsabschnitte 30 und 32 an dem Aufnahmeelement 10 lagerbar. Dazu umfasst das Presselement 26 beispielsweise zwei laterale Lagerabschnitte, die als um eine zur Pressachse 2 parallelen Achse gebogene Enden des Presselements 26 ausgebildet sind, die im zusammengesetzten Zustand der Vorrichtung 100 die Führungsabschnitte 30 und 32 zumindest teilweise umschließen.

Es kann vorgesehen sein, dass die Führungsabschnitte 30 und 32 Einsetzabschnitte 30a und 32a umfassen, die ausgebildet sind, das Presselement 26 von dem Aufnahmeelement 10 freizugeben und das Presselement 26 in die Führungsabschnitte 30 und 32 einzusetzen. Im Beispiel sind die Einsetzabschnitte 30a und 32a derart ausgestaltet, dass die Lagerabschnitte des Presselements 26 die Führungsabschnitte 30 und 32 nicht mehr umschließen, sobald sich das Presselement 26 im Bereich der Einsetzabschnitte 30a und 32a befindet. Die Vorrichtung 100 kann somit in das Aufnahmeelement 10 und das Presselement 26 aufgetrennt werden. Dadurch können beide Teile einfacher gereinigt werden.

Im Beispiel weist die umlaufenden Wandung 14 einen ersten gerade verlaufenden Bereich 31 und einen zweiten gerade verlaufenden Bereich 33 auf, die gegenüberliegend und parallel zueinander sind. Der erste gerade verlaufende Bereich 31 bildet den Führungsabschnitt 30 und zweite gerade verlaufende Bereich 33 bildet den Führungsabschnitt 32 aus.

Durch die Neigung der Aufnahmefläche 16 vergrößert sich ein Abstand zwischen einer der Aufnahmefläche 16 zugewandten Außenfläche 28 des Presselements 26 bei einer Bewegung in die Pressrichtung 4, also beim Pressen. Dadurch befindet sich zumindest ein Teil des Segments 200, das insbesondere als Schnitz ausgebildet ist, beim Pressen beispielsweise zwischen der Aufnahmefläche 16 und der Außenfläche 28 und wird somit besser in der Vorrichtung 100 gehalten. Das Pressen des Segments 200 ist dadurch verbessert, da größere Presskräfte angewandt werden können, ohne dass das Segment 200 aus dem Aufnahmeelement 10 fällt.

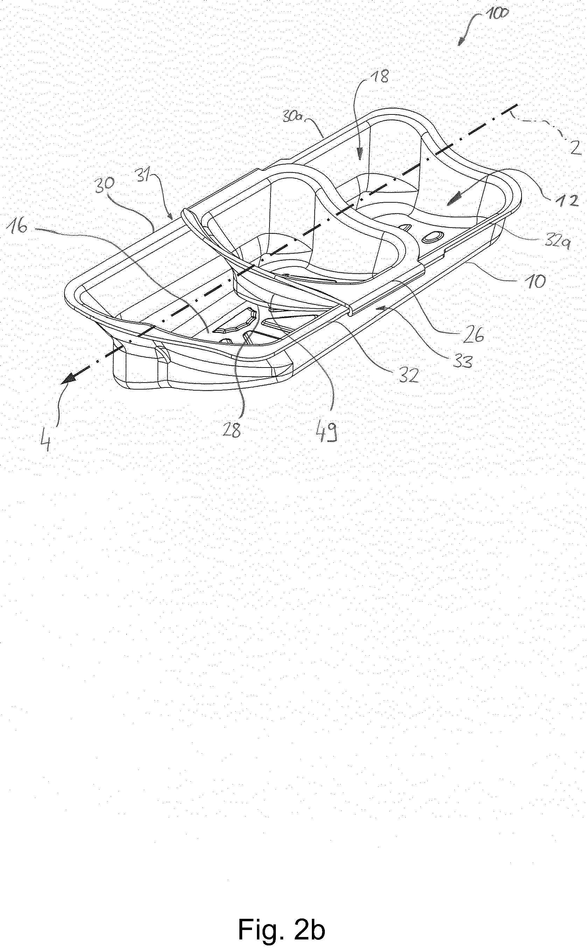

Die Figur 2b zeigt die Vorrichtung 100 der Figur 2a in einer anderen Perspektive. Es kann vorgesehen sein, dass das Presselement 26 in einem zusammengesetzten Zustand eine in Pressrichtung 4 orientierte Außenkontur 49 aufweist, insbesondere eine Presskontur 49, die mit der ersten Ebene 20 zumindest abschnittsweise einen in die Pressrichtung 4 geöffneten rechten Winkel und/oder einem stumpfen Winkel einschließt. Dadurch ist eine Gefahr eines Herausfalles des Segments 200 verringert, da das Segment 200 beim Pressen durch die Presskontur 49 in Richtung der Aufnahmefläche 16 gedrückt wird.

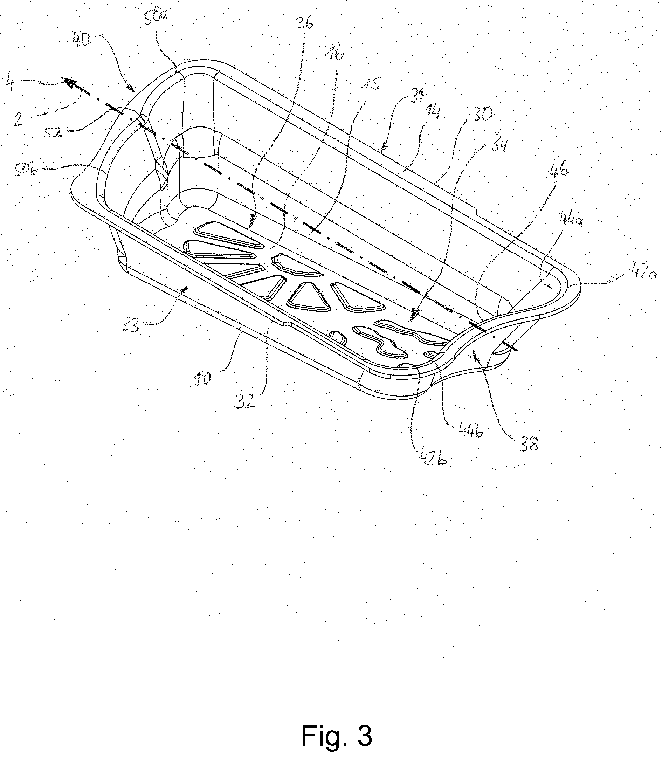

Die Figur 3 zeigt eine schematische Darstellung des Aufnahmeelements 10 in einer perspektivischen Ansicht. Im Beispiel umfasst die umlaufende Wandung 14 eine zumindest teilweise umlaufende Innenkontur 15, die um eine Horizontale zur Aufnahmefläche 16 konkav ist. Die umlaufende Wandung 14 grenzt mittels der umlaufenden Innenkontur 15 an die Aufnahmefläche 16 an. Die umlaufenden Innenkontur 15 kann beispielsweise als Rundung in Form eines Radius oder als Fase ausgebildet sein. Eine als Rundung ausgebildete umlaufenden Innenkontur 15 ermöglicht eine kostengünstige Herstellung des Aufnahmeelements 10. Zudem ermöglicht die umlaufenden Innenkontur 15 ein einfaches Reinigen des Aufnahmeelements 10, da sich keine Ablagerungen an schwer erreichbaren Stellen im Aufnahmeelement 10 ansammeln.

Die Aufnahmefläche 16 umfasst einen ersten Abschnitt 34, beispielsweise einen Ausgussabschnitt 34, und einen an den ersten Abschnitt 34 angrenzenden zweiten Abschnitt 36, beispielsweise einen Pressabschnitt 36. Der Pressabschnitt 36 ist in Pressrichtung 4 nach dem Ausgussabschnitt 34 vorgesehen. Beim Pressen wird das Segment 200 zumindest teilweise von dem Pressabschnitt 36 des Aufnahmefläche 16 gehalten. Der Ausgussabschnitt 34 kann zum Ausgießen des Safts des Segments 200 während und/oder nach dem Pressen benutzt werden. Beim Pressen wird das Presseelement 26 in Richtung des Pressabschnitts 36 bewegt.

Es kann vorgesehen sein, dass die umlaufende Wandung 14 einen an den ersten Abschnitt 34 der Aufnahmefläche 16 angrenzenden ersten Bereich 38 umfasst, beispielsweise einen Ausgussbereich 38, der zumindest einen Ausguss 42a und/oder 42b umfasst, der eine entlang der umlaufenden Wandung 14 konkav geformte Innenkontur 44a und /oder 44b aufweist.

Im Beispiel umfasst der erste Bereich 38 der umlaufenden Wandung 14 einen ersten lateralen Ausguss 42a mit einer entlang der umlaufenden Wandung 14 konkav geformten Innenkontur 44a, einen zweiten lateralen Ausguss 42b mit einer entlang der umlaufenden Wandung 14 konkav geformten Innenkontur 44b und eine entlang der umlaufenden Wandung 14 konvex geformte Innenkontur 46, wobei die konvex geformte Innenkontur 46 den ersten Ausguss 42a und den zweiten Ausguss 42b verbindet. Die konkaven Innenkonturen 44a und 44b ermöglichen ein sauberes und gezieltes Ausgießen des Safts des Segments 200. Die konkaven Innenkonturen 44a und 44b können als Rundung oder aus Fasen ausgebildet sein. Die konvex geformte Innenkontur 46 verhindert im Wesentlichen, dass der Saft des Segments 200 beim Ausgießen am Ausgussabschnitt 34 und Ausgussbereich 38 außerhalb der Ausgüsse 42a und 42b aus dem Aufnahmeelement 10 austritt.

Der erste laterale Ausguss 42a und der zweite laterale Ausguss 42b können entlang der Pressachse 2 axial versetzt sein, beispielsweise derart, dass der erste laterale Ausguss 42a nach dem zweiten lateralen Ausguss 42b entgegen der Pressrichtung 4 vorgesehen ist. Im Beispiel ist zudem der erste laterale Ausguss 42a einem Abschnitt der Aufnahmefläche 16 zugeordnet, der einen größeren Abstand zur Einlegeöffnung 18 aufweist als ein Abschnitt, dem der zweite Ausguss 42b zugeordnet ist. In anderen Worten ist der erste Ausguss 42a an einer Stelle vorgesehen, bei der die Aufnahmefläche 16 relativ zur Einlegeöffnung 18 eine größere Tiefe aufweist als eine Stelle, an der der zweite Ausguss 42b vorgesehen ist.

Im Beispiel schließt sich der Ausgussbereich 38 mit dem ersten Ausguss 42a an den ersten gerade verlaufenden Bereich 31 der umlaufen Wandung 14, in Form des Führungsabschnitts 30, und mit dem zweiten Ausguss 42b an den zweiten gerade verlaufenen Bereich 33 der umlaufenden Wandung 14, in Form des Führungsabschnitts 32, an.

Die umlaufende Wandung 14 umfasst beispielsweise einen dem ersten Bereich 38 gegenüberliegenden zweiten Bereich 40, beispielsweise einen Pressbereich 40, der an den zweiten Abschnitt 36 beziehungsweise Pressabschnitt 36 der Aufnahmefläche 16 angrenzt. Der zweite Bereich 40 weist zumindest eine entlang der umlaufenden Wandung 14 konkav geformte Innenkontur 50a und/oder 50b auf.

Im Beispiel umfasst der zweite Bereich 40 eine erste konkave Innenkontur 50a und eine zweite konkave Innenkontur 50b, die beispielsweise mittels einer Verbindungskontur 52 verbunden sind. Die Verbindungskontur 52 kann als konvexe Kontur in Form einer Rundung oder auch als Fase ausgebildet sein. Die erste konkave Innenkontur 50a und die zweite konkave Innenkontur 50b ermöglichen ein sicheres Halten des Segments 200 beim Pressen auch für unterschiedliche Formen des Segments 200. Beispielsweise kann die zweite konkave Innenkontur 50b ausgebildet sein, eine Außenseite eines Teils einer Scheibe der Zitrusfrucht in der Pressrichtung 4 sicher zu lagern. Die erste konkave Innenkontur 50a kann ausgebildet sein, eine Außenseite eines Schnitzes der Zitrusfrucht sicher in der Pressrichtung 4 zu lagern.

Denkbar ist, dass die erste konkave Innenkontur 50a und die zweite konkave Innenkontur 50b des zweiten Bereichs 40 entlang der Pressachse 2 axial versetzt sind, insbesondere derart, dass die erste konkave Innenkontur 50a nach der zweiten konkaven Innenkontur 50b in der Pressrichtung 4 vorgesehen ist.

Im Beispiel schließt sich der Pressberiech 40 mit der ersten konkaven Innenkontur 50a an den ersten gerade verlaufenden Bereich 30 der umlaufen Wandung 14 und mit der zweiten konkaven Innenkontur 50b an den zweiten gerade verlaufenden Bereich 33 der umlaufenden Wandung 14 an.

Es kann vorgesehen sein, dass die erste konkave Innenkontur 50a und die zweite konkave Innenkontur 50b des Pressbereichs 40 ein Größenverhältnis entlang der umlaufenen Wandung 14 von ungefähr 1:2 aufweisen.

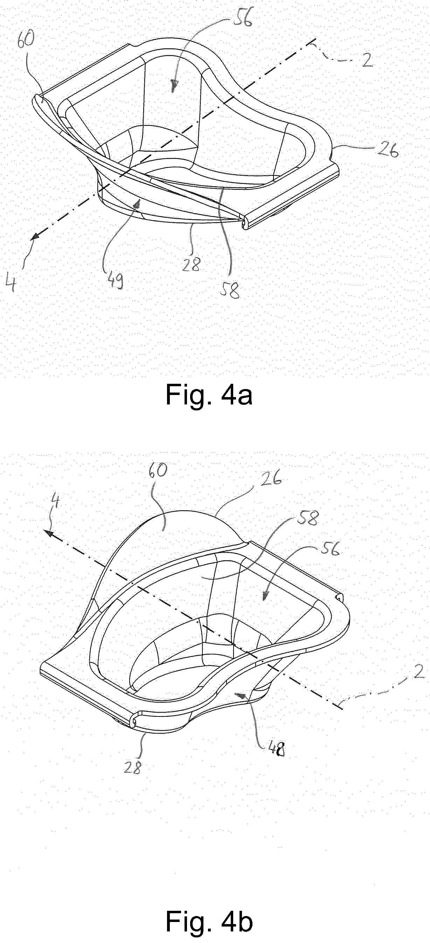

Die Figuren 4a und 4b zeigen jeweils das Presselement 26 in einer schematischen Darstellung in unterschiedlichen perspektivischen Ansichten. Das Presselement 26 weist beispielsweise eine dem ersten Bereich 38 der umlaufenden Wandung 14 zugewandte entsprechende Gegenkontur 48 auf. Die Gegenkontur 48 ist entsprechend dem Ausgussbereich 38 geformt und diesem angepasst. Dadurch kann das Presselement 26 bis in einer Startposition, in der sich der Ausgussbereich 38 und die Gegenkontur 48 zumindest teilweise kontaktieren bewegt werden. In dieser Starposition kann beispielsweise das Presselement 26 mittels der Einsetzabschnitt 30a und 32a in das Aufnahmeelement 10 eingesetzt oder freigegebenen werden. Dadurch dass die Gegenkontur 48 und der Ausgussbereich 38 aneinander angepasst sind schließt sich eine Lücke zwischen diesen nahezu vollständig, was zu einer Platzeinsparung führt. Die Vorrichtung 100 kann somit in Ihren Abmessungen verkleinert werden, ohne dabei einen Verlust in ihrer Funktion hinnehmen zu müssen. Zudem wird durch die an den Ausgussbereich 38 angepasste Gegenkontur 48 ein größtmöglicher Einlegebereich in den Aufnahmeraum 12 freigegebenen, wodurch größere Segmente 200 durch das Aufnahmeelemente 10 aufgenommen und mit der Vorrichtung 100 gepresst werden können.

Die Gegenkontur 48 des Presselements 26, der erste Bereich 38 beziehungsweise Ausgussbereich 38 der umlaufenden Wandung 14 und die Einsetzabschnitte 30a und 32a können zusammenhängend derart ausgestaltet sein, dass das Presselement 26 ausschließlich in einer korrekten Richtung in das Aufnahmeelement 10 eingesetzt werden kann. Die korrekte Richtung ist beispielsweise derart definiert, dass die Presskontur 49 des Presselements 26 dem zweiten Bereich 40 beziehungsweise dem Pressbereich 40 der umlaufenden Wandung 14 des Aufnahmeelements 10 zugewandt ist. Dies kann beispielsweise damit erzielt werden, dass die Einsetzabschnitte 30a und 32a lediglich einen an eine Abmessung des Presselements 26 angepassten Abstand der Führungsabschnitte 30 und 32 freigeben der nur eingehalten werden kann, wenn das Presselement 26 in der korrekten Richtung eingesetzt wird. Wird das Presselement 26 nicht in der korrekten Richtung eingesetzt, bleiben Lücken zwischen dem ersten Bereich 38 und dem Presselement 26 bestehen und der angepasste Abstand kann nicht eingehalten werden. Wird das Presselement 26 in der korrekten Richtung eingesetzt schließen sich diese Lücken, aufgrund der an den ersten Bereich 38 der umlaufenden Wandung 14 angepassten Gegenkontur 48 des Presselements 26 und der angepasste freigegebene Abstand wird eingehalten, wodurch das Presselement 26 in die Führungsabschnitte 30 und 32 eingesetzt werden kann.

Es ist vorstellbar, dass die dem zweiten Bereich 40 der umlaufenden Wandung 14 zugewandte Außenkontur 49, beispielsweise die Presskontur 49 des Presselements 26, als Gegenkontur zu dem zweiten Bereich 40 ausgebildet ist, beispielsweise sodass die dem zweiten Bereich 40 zugewandte Außenkontur 49 um eine zur Einlegeöffnung 18 orthogonalen Achse konvex geformt ist. Dadurch wird das Segment 200, insbesondere in Form eines Schnitzes, während des Pressens von der Presskontur 49 an die umlaufende Wandung 14, beispielsweise an den ersten gerade verlaufenden Bereich 31 gedrückt und somit von der Aufnahmefläche 16, dem Pressbereich 40, beispielsweise der ersten konkaven Innenkontur 50a, der umlaufenden Wandung 14 und der Presskontur 49 des Presselements 26 stabil gehalten. Somit können größere Presskräfte aufgebracht werden, die zu einem höheren Saftertrag führen. Zudem können mittels der Presskontur 49 auch Segmente 200 in Form eines Teils einer Scheibe besser gepresst werden, da die konvexe Form der Presskontur 49 an eine Form des Teils der Scheibe der Zitrusfrucht angepasst ist.

Es ist vorstellbar, dass die dem zweiten Bereich 40 zugewandte Außenkontur 49 des Presselements 26 zu der zweiten Innenkontur 50b des zweiten Bereichs 40 anschmiegbar ausgebildet ist. Dadurch wird eine durch das Presselemente 26 eingebrachte Presskraft optimal auf des Segment 200 der Zitrusfrucht, insbesondere in Form eines Teiles einer Scheibe der Zitrusfrucht übertragen. Ein Saftertrag ist somit erhöht.

Das Presselement 26 kann eine Ausnehmung 56 mit einer Öffnungsrichtung umfassen, die mit einer Öffnungsrichtung der Einlegeöffnung 18 übereinstimmt. Durch die Ausnehmung 56 kann das Presselemente 26 komfortabler betätigt werden und es können größere Presskräfte eingebracht werden. Des Weiteren ermöglicht die Ausnehmung 56 ein einfaches Pressen mit der Vorrichtung 100 mit einer Hand.

Denkbar ist, dass die Ausnehmung 56 eine konkave Innenkontur 58 aufweist, insbesondere eine konkave Betätigungskontur 58, die entgegen der Pressrichtung 4 orientiert ist. Durch die konkave Innenkontur 58 ist ein Komfort der Bedienung der Vorrichtung 100 weiter verbessert.

Es kann vorgesehen sein, dass das Presselement 26 einen Betätigungsabschnitt 60 umfasst, der sich, insbesondere in einem zusammengesetzten Zustand der Vorrichtung 100, außerhalb des Aufnahmeraums 12 erstreckt. Durch den Betätigungsabschnitt 60 können größere Presskräfte eingebracht werden, wodurch das Pressen des Segments 200 verbessert wird, da ein Saftertrag erhöht wird. Zudem ist der Komfort der Bedienung der Vorrichtung 100 weiter gesteigert.

Durch die Ausnehmung 56 ist das Presselement 26 auch kostengünstig herzustellen, beispielsweise mittels eines Tiefziehverfahrens. Dabei resultiert ein Presselement 26, das im Wesentlichen eine kontinuierliche Wandstärke aufweist.

Die Figur 5 stellt das Aufnahmeelement 10 in einer schematischen Darstellung in einer Draufsicht dar. In der Figur 5 ist zudem vereinfacht das Segment 200 in Form eines Schnitzes 200 dargestellt. Beim Pressen wird der Schnitz 200, mittels des nicht dargestellten Presselements 26, mit einer ersten Außenseite, beispielsweise einer Schale der Zitrusfrucht, in die erste konkave Innenkontur 50a des zweiten Bereichs 40 der umlaufenden Wandung 14 gedrückt. Das Presselement 26 überträgt die eingebrachte Presskraft mittels der Presskontur 49 auf eine zweite Außenseite, beispielsweise einer Schale der Zitrusfrucht, des Schnitzes 200. Durch die konvex geformte Presskontur 49 wird der Schnitz 200 zudem an den ersten gerade verlaufenden Bereich 31 der umlaufenden Wandung 14 gedrückt. Die Presskontur 49 des Presselements 26 drückt den Schnitz 200 zudem in Richtung der Aufnahmefläche 16, wegen des zwischen der Presskontur 49 und der ersten Ebene 20 in die Pressrichtung 4 geöffneten rechten Winkels und/oder stumpfen Winkels. Somit ist der Schnitz 200 sicher zwischen dem Aufnahmeelement 10 und dem Presselement 26 gelagert und kann gepresst werden, wobei lediglich an der Schale des Schnitzes 200 gepresst wird.

Es kann vorgesehen sein, dass die Aufnahmefläche 16 zumindest eine Erhebung 62 umfasst. Durch die zumindest eine Erhebung 62 liegt das Segment 200 nicht direkt auf der Aufnahmefläche 16 auf, sondern es besteht eine Lücke zwischen Segment 200 und Aufnahmefläche 16. Durch diese Lücke kann der Saft des Segment 200 besser fließen, ohne dabei von dem Segment beeinträchtigt zu werden. Im Beispiel umfasst die Aufnahmefläche 16 eine Vielzahl an verteilten und unterschiedlich geformten Erhebungen 62.

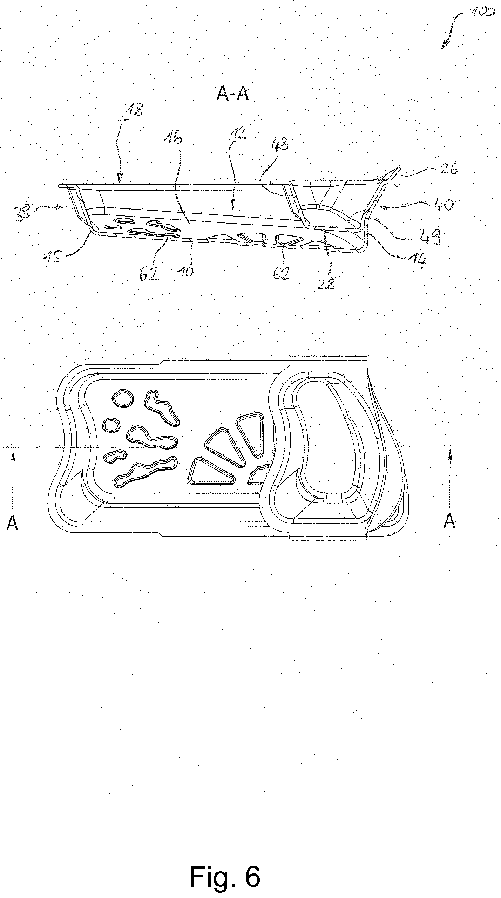

Die Figur 6 zeigt die Vorrichtung 10 in einer schematischen Darstellung in einer Schnittansicht eines Schnittes A-A, der entlang der Pressachse 2 orientiert ist. In einer beispielhaften Ausführung kann sich der Aufnahmeraum 12 ausgehend von der Einlegeöffnung 18 in Richtung der Aufnahmefläche 16 zumindest teilweise und/oder entlang der umlaufenden Wandung 14 zumindest bereichsweise verjüngen. Durch die Verjüngung vergrößert sich allgemein ein Volumen des Aufnahmeraums 12, wodurch mehr Saft aufgenommen werden kann.

Im Beispiel der Figur 6 verjüngt sich der Aufnahmeraum 12 im Wesentlichen komplett entlang der umlaufenden Wandung 12. Im zweiten Bereich 40, also im Pressbereich 40, verjüngt sich der Aufnahmeraum 12 allerdings nur teilweise. Ausgehend von der Einlegeöffnung 18 verjüngt sich der Aufnahmeraum 12 zunächst und verläuft denn im Wesentlichen senkrecht zur Einlegeöffnung 18 bis zur umlaufenden Innenkontur 15 beziehungsweise der Aufnahmefläche 16. Durch diesen Verlauf der Verjüngung des Aufnahmeraums 12 im Pressbereich 40 bleibt eine Qualität der Lagerung des Segments 200 durch den Pressbereich 40 unbeeinträchtigt und dennoch ist ein Volumen des Aufnahmeraums 12 vergrößert. Es kann vorgesehen sein, dass sich der Aufnahmeraum 12 in Bereichen der umlaufenen Wandung 14, beispielsweise dem zweiten gerade verlaufenden Bereich 33 oder dem Pressbereich 33 nicht verjüngt oder vergrößert, sondern im Wesentlichen orthogonal zur Einlegeöffnung 18 verläuft.

Es kann vorgesehen sein, dass sich der Aufnahmeraum 12 zumindest im ersten Bereich 38, also im Ausgussbereich 38, der umlaufenden Wandung 14, insbesondere an dem zumindest einen Ausguss 42a und/oder 42b, zumindest teilweise in Richtung der Aufnahmefläche 16 verjüngt. Im Ausgussbereich 38 bewirkt der verjüngte Aufnahmeraum 12 zudem eine Verbesserung des Ausgießens des Safts des Segments 200.

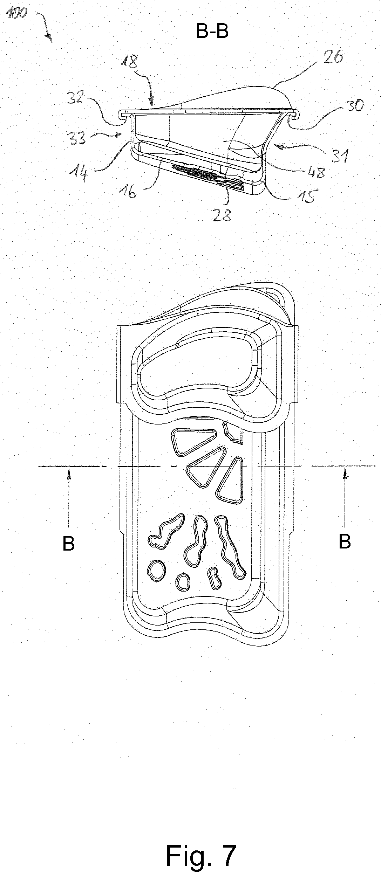

Die Figur 7 zeigt eine die Vorrichtung 10 in einer schematischen Darstellung in einer Schnittansicht eines Schnittes B-B, der orthogonal der Pressachse 2 orientiert ist. Die Figuren 6 und 7 veranschaulichen unter anderem die Neigung der Aufnahmefläche 16 relativ zur Einlegeöffnung 18. Im Beispiel ist die Aufnahmefläche 16 derart geneigt, dass ein Bereich der Aufnahmefläche 16, der der ersten konkaven Innenkontur 50a des Pressbereichs 40 zuzuordnen ist, den größten Abstand zur Einlegeöffnung 18 aufweist, gefolgt von einem Bereich der Aufnahmefläche 16, der dem ersten Ausguss 42a des Ausgussbereichs 38 zuzuordnen ist, gefolgt von einem Bereich der Aufnahmefläche 16, der der zweiten konkaven Innenkontur 50b des Pressbereichs 40 zuzuordnen ist, gefolgt von einem Bereich der Aufnahmefläche 16, der dem zweiten Ausguss 42b des Ausgussbereichs 38 zuzuordnen ist.

In einer Ausführungsform der Vorrichtung 10 schließen die erste Ebene 20 und die zweite Ebene 22 einen Grundkörper ein, der eine in der ersten Ebene 20 liegende zur Pressachse 2 symmetrische Grundfläche eines Vierecks, beispielsweise Rechtecks, aufweist, wobei der Grundkörper ausgehend von der Grundfläche vier Seitenkanten mit unterschiedlichen Höhen umfasst.

## Patentansprüche

1. Eine Vorrichtung (100) zum Pressen eines Segments (200) einer Zitrusfrucht, beispielsweise eines Schnitzes (200), umfassend:
- ein Aufnahmeelement (10) mit einem Aufnahmeraum (12), der durch eine umlaufende Wandung (14) und eine Aufnahmefläche (16) begrenzt ist, wobei der Aufnahmeraum (12) eine Einlegeöffnung (18) aufweist;
- ein Presselement (26), das am Aufnahmeelement (10) anordenbar ist, sodass es sich zumindest teilweise innerhalb des Aufnahmeraums (12) erstreckt und entlang einer Pressachse (2) relativ zum Aufnahmeelement (10) translatorisch bewegbar ist;
wobei die Pressachse (2) in einer durch die Einlegeöffnung (18) definierten ersten Ebene (20) liegt und die Aufnahmefläche (16) eine zweite Ebene (22) definiert, die eine Schnittgerade (24) mit der ersten Ebene (20) aufweist.

2. Die Vorrichtung (100) nach Anspruch 1, wobei die Schnittgerade (24) parallel zur Pressachse (2) ausgerichtet ist.

3. Die Vorrichtung (100) nach Anspruch 1 wobei die Pressachse (2) und die Schnittgerade (24) einen Schnittpunkt bilden und beispielweise die Pressachse (2) und die Aufnahmefläche (16) einen, beispielsweise in Pressrichtung (4) geöffneten, spitzen Winkel einschließen.

4. Die Vorrichtung (100) nach einem der vorherigen Ansprüche, wobei die Schnittgerade (24) außerhalb der Aufnahmefläche (16) liegt.

5. Die Vorrichtung (100) nach einem der vorstehenden Ansprüche, wobei das Aufnahmeelement (10) zwei gegenüberliegende laterale Führungsabschnitte (30, 32) umfasst, die sich an die Einlegeöffnung (18) anschließen, wobei das Presselement (26) mittels der Führungsabschnitte (30, 32) an dem Aufnahmeelement (10) lagerbar ist
, wobei beispielsweise die Führungsabschnitte (30, 32) Einsetzabschnitte (30a, 32a) umfassen, die ausgebildet sind, das Presselement (26) von dem Aufnahmeelement (10) freizugeben und das Presselement (26) in die Führungsabschnitte (30, 32) einzusetzen.

6. Die Vorrichtung (100) nach einem der vorherigen Ansprüche, wobei die umlaufende Wandung (14) eine zumindest teilweise umlaufende Innenkontur (15) umfasst, die um eine Horizontale zur Aufnahmefläche (16) konkav ist, wobei die umlaufende Wandung (14) mittels der umlaufenden Innenkontur (15) an die Aufnahmefläche (16) angrenzt.

7. Die Vorrichtung (100) nach einem der vorherigen Ansprüche, wobei die Aufnahmefläche (16) einen ersten Abschnitt (34), beispielsweise einen Ausgussabschnitt (34), und einen an den ersten Abschnitt (34) angrenzenden zweiten Abschnitt (36), beispielsweise einen Pressabschnitt (36), umfasst.
, wobei beispielsweise die umlaufende Wandung (14) einen an den ersten Abschnitt (34) angrenzenden ersten Bereich (38) umfasst, beispielsweise einen Ausgussbereich (38), der zumindest einen Ausguss (42a, 42b) umfasst, der eine entlang der umlaufenden Wandung (14) konkav geformte Innenkontur (44a, 44b) aufweist.
, wobei beispielsweise der erste Bereich (38) der umlaufenden Wandung (14) einen ersten lateralen Ausguss (42a) mit einer entlang der umlaufenden Wandung (14) konkav geformten Innenkontur (44a), einen zweiten lateralen Ausguss (42b) mit einer entlang der umlaufenden Wandung (14) konkav geformten Innenkontur (44b) und eine entlang der umlaufenden Wandung (14) konvex geformte Innenkontur (46) umfasst, wobei die konvex geformte Innenkontur (46) den ersten Ausguss (42a) und den zweiten Ausguss (42b) verbindet
, wobei beispielsweise der erste laterale Ausguss (42a) und der zweite laterale Ausguss (42b) entlang der Pressachse (2) axial versetzt sind, beispielsweise derart, dass der erste laterale Ausguss (42a) nach dem zweiten lateralen Ausguss (42b) entgegen der beziehungsweise einer Pressrichtung (4) vorgesehen ist
, wobei beispielsweise das Presselement (26) eine dem ersten Bereich (38) der umlaufenden Wandung (14) zugewandte entsprechende Gegenkontur (48) aufweist.
, wobei beispielsweise die umlaufende Wandung (14) einen dem ersten Bereich (38) gegenüberliegenden zweiten Bereich (40), beispielsweise einen Pressbereich (40), umfasst, der an den zweiten Abschnitt (36) der Aufnahmefläche (16) angrenzt, wobei der zweite Bereich (40) zumindest eine entlang der umlaufenden Wandung (14) konkav geformte Innenkontur (50a, 50b) aufweist.
, wobei beispielsweise der zweite Bereich (40) eine erste konkave Innenkontur (50a) und eine zweite konkave Innenkontur (50b) umfasst, die beispielsweise mittels einer Verbindungskontur (52) verbunden sind
, wobei beispielsweise die erste konkave Innenkontur (50a) und die zweite konkave Innenkontur (50b) des zweiten Bereichs (40) entlang der Pressachse (2) axial versetzt sind, insbesondere derart, dass die erste konkave Innenkontur (50a) nach der zweiten konkaven Innenkontur (50b) in der beziehungsweise einer Pressrichtung (4) vorgesehen ist.
, wobei beispielsweise das Presselement (26) eine dem zweiten Bereich (40) der umlaufenden Wandung (14) zugewandte Außenkontur (49), beispielsweise eine Presskontur (49) aufweist, die als Gegenkontur zu dem zweiten Bereich (40) ausgebildet ist, beispielsweise sodass die dem zweiten Bereich (40) zugewandte Außenkontur (49) um eine zur Einlegeöffnung (18) im Wesentlichen orthogonalen Achse konvex geformt ist.
, wobei beispielsweise die dem zweiten Bereich (40) zugewandte Außenkontur (49) des Presselements (26) zu der zweiten Innenkontur (50b) des zweiten Bereichs (40) anschmiegbar ausgebildet ist.

8. Die Vorrichtung (100) nach einem der vorherigen Ansprüche, wobei das Presselement (26) eine Ausnehmung (56) mit einer Öffnungsrichtung umfasst, die mit einer Öffnungsrichtung der Einlegeöffnung (18) übereinstimmt.

9. Die Vorrichtung (100) nach Anspruch 8, wobei die Ausnehmung (56) eine konkave Innenkontur (58) aufweist, insbesondere eine konkave Betätigungskontur (58), die entgegen der beziehungsweise einer Pressrichtung (4) orientiert ist.

10. Die Vorrichtung (100) nach einem der vorherigen Ansprüche, wobei das Presselement (26) einen Betätigungsabschnitt (60) umfasst, der sich außerhalb des Aufnahmeraums (12) erstreckt.

11. Die Vorrichtung (100) nach einem der vorherigen Ansprüche, wobei die Aufnahmefläche (16) zumindest eine Erhebung (62) umfasst.

12. Die Vorrichtung (100) nach einem der vorherigen Ansprüche, wobei sich der Aufnahmeraum (12) ausgehend von der Einlegeöffnung (18) in Richtung der Aufnahmefläche (16) zumindest teilweise und/oder entlang der umlaufenden Wandung (14) zumindest bereichsweise verjüngt.

13. Die Vorrichtung (100) nach wenigstens einem der Ansprüche 7 bis 12, wobei sich der Aufnahmeraum (12) zumindest im ersten Bereich (38) der umlaufenden Wandung (14), insbesondere an dem zumindest einen Ausguss (42a, 42b), zumindest teilweise in Richtung der Aufnahmefläche (16) verjüngt.

14. Eine Vorrichtung (100) zum Pressen eines Segments (200) einer Zitrusfrucht, beispielsweise eines Schnitzes (200), umfassend:
- ein Aufnahmeelement (10) mit einem Aufnahmeraum (12), der durch eine umlaufende Wandung (14) und eine Aufnahmefläche (16) begrenzt ist, wobei der Aufnahmeraum (12) eine Einlegeöffnung (18) aufweist;
- ein Presselement (26), das am Aufnahmeelement (10) anordenbar ist, sodass es sich zumindest teilweise innerhalb des Aufnahmeraums (12) erstreckt und entlang einer Pressachse (2) relativ zum Aufnahmeelement (10) translatorisch bewegbar ist;
wobei die Pressachse (2) in einer durch die Einlegeöffnung (18) definierten ersten Ebene (20) liegt und die Aufnahmefläche (16) eine zweite Ebene (22) definiert, wobei die erste Ebene (20) und die zweite Ebene (22) einen Grundkörper einschließen, der eine in der ersten Ebene (20) liegende zur Pressachse (2) symmetrische Grundfläche eines Vierecks, beispielsweise Rechtecks, aufweist, wobei der Grundkörper ausgehend von der Grundfläche vier Seitenkanten mit unterschiedlichen Höhen umfasst.

15. Eine Vorrichtung (100) geeignet zum Pressen eines Schnitzes (200) einer Zitrusfrucht, wobei der Schnitz (200) mittels zwei, beispielsweise entlang einer Längsachse der Zitrusfrucht, axial orientierter radialer Schnitte aus einer ellipsoiden Zitrusfrucht ausgelöst ist und die Schnitte in einer Umfangsrichtung der Zitrusfrucht einen Winkel zwischen 5° und 180°, beispielsweise 5° und 100°, einschließen, umfassend:
- ein Aufnahmeelement (10) mit einem Aufnahmeraum (12), der durch eine umlaufende Wandung (14) und eine Aufnahmefläche (16) begrenzt ist, wobei der Aufnahmeraum (12) eine Einlegeöffnung (18) aufweist;
- ein Presselement (26), das am Aufnahmeelement (10) anordenbar ist, sodass es sich zumindest teilweise innerhalb des Aufnahmeraums (12) erstreckt und entlang einer Pressachse (2) relativ zum Aufnahmeelement (10) translatorisch bewegbar ist;
wobei die Aufnahmefläche (16) dazu ausgebildet ist, den Schnitz (200) an einer Schnittfläche aufzunehmen und eine Längsachse des Schnitzes (200) im Wesentlichen parallel zur Pressachse (2) orientierbar ist, wobei beispielsweise sich der Schnitz (200) bei einem Pressen mit einem von dem Schnitz (200) umfassten Teil der Schale der Zitrusfrucht an der umlaufenden Wandung (14) und dem Presselement (26) abstützen kann.
